# EUROPÄISCHE PATENTSCHRIFT

(11) **EP 2 275 366 B1**
(45) Veröffentlichungstag und Bekanntmachung des Hinweises auf die Patenterteilung: **22.08.2012**
(21) Anmeldenummer: 10167807.6
(22) Anmeldetag: 30.06.2010
(51) Int. Cl.: B65G 15/42, B29D 29/08, B29C 47/02

(54) **Verfahren zur Herstellung einer Auflage für einen Riemen und so hergestellter Riemen**
Method for manufacturing a support for a belt and belt made by said method
Procédé de fabrication d'un recouvrement pour une courroie et courroie ainsi obtenue

(30) Priorität: 30.06.2009 DE 102009031152
(43) Veröffentlichungstag der Anmeldung: 19.01.2011
(73) Patentinhaber: Krones AG, 93073 Neutraubling (DE)
(72) Erfinder: Dünzinger, Bernhard, 84069 Unterdeggenbach (DE); Schütz, Michael, 84097 Sandsbach (DE)
(74) Vertreter: Grünecker, Kinkeldey, Stockmair & Schwanhäusser

(56) Entgegenhaltungen:
- DE-A1- 3 527 640
- DE-A1-102004 030 722
- DE-A1-102005 056 374
- DE-U1- 29 821 826
- DE-U1-202005 019 111
- DE-U1-202009 003 295
- JP-A- 2000 355 055
- JP-B- 50 017 918
- US-A- 5 741 197

## Beschreibung

### Gebiet der Erfindung

Die Erfindung betrifft ein Verfahren zur Herstellung einer mit Gefäßen in Eingriff bringbaren, profilierten Auflage für einen Riemen zum Transportieren der Gefäße in einer Behandlungsmaschine. Des Weiteren betrifft die Erfindung ein Verfahren zur Herstellung eines Riemens zum Transportieren von Gefäßen in einer Behandlungsmaschine. Des Weiteren betrifft die Erfindung einen Riemen mit einer geschlossenen Oberfläche zum Transportieren von Gefäßen in einer Behandlungsmaschine.

### Stand der Technik

In Behandlungsmaschinen, wie beispielsweise Gefäßinspektionsmaschinen, werden Riemen zum Transportieren der Gefäße, wie beispielsweise Flaschen, verwendet. Üblicherweise umfassen solche Riemen eine Auflage und einen Treibriemen.

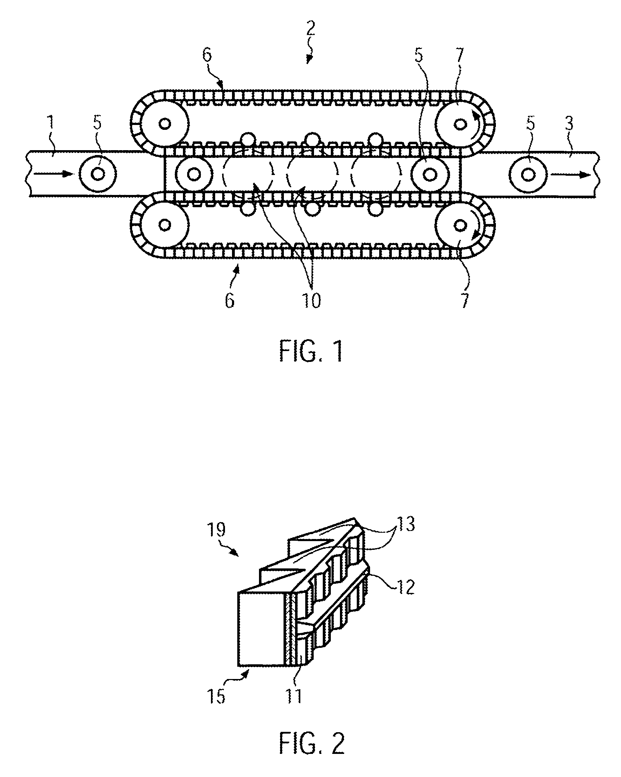

In Fig. 1 ist beispielsweise die Anordnung eines Riemenpaares zur Beförderung von Flaschen schematisch dargestellt. Ein Zuförderer 1 befördert eine Flasche 5 zur Riemenstation 2. Die sich gegenüberliegenden Riemen 6 werden durch jeweils ein Zahnriemenrad 7 angetrieben und führen die Flasche 5 über Einbauten 10, wie beispielsweise Lichtquellen, Kameras und Sensoren, bis zum Abförderer 3.

Aus dem Stand der Technik sind Verfahren bekannt, bei denen Auflagen für einen Riemen mit großen Presswalzen hergestellt, d.h. geprägt werden. Derartige Walzen haben üblicherweise eine Breite von drei Metern oder dergleichen. Nach der Prägung müssen die einzelnen Streifen entsprechend in weniger breite Teilstreifen geschnitten werden. Von Nachteil ist dabei, dass solche Verfahren aufwendig und relativ unflexibel sind.

Das Dokument DE 10 2005 056 374 zeigt die Herstellung eines Zahnriemens mit Hilfe eines Formrads und eines Deckbands. An der von der Verzahnung wegweisenden Seite des Zahnriemens ist ein Schwammkörper aufgeklebt.

Das Dokument DE 20 2005 019 111 beschreibt einen Riemen bestehend aus einem Zahnriemen und einer Auflage. Die Auflage weist mehrere in gleichmäßigen Abständen längs zur Riemenerstreckung angeordnete elastische Elemente auf.

### Beschreibung der Erfindung

Es ist Aufgabe der vorliegenden Erfindung, diese beschriebenen Nachteile des Stands der Technik zu vermeiden. Diese Aufgabe wird durch den Gegenstand des Patentanspruchs 1 gelöst.

Mit den Merkmalen des Patentanspruchs 1 wird ein Verfahren zur Herstellung einer mit Gefäßen in Eingriff bringbaren, profilierten Auflage für einen Riemen zum Transportieren der Gefäße in einer Behandlungsmaschine vorgeschlagen, wobei die Auflage durch Extrudieren eines ersten Kunststoffs erhalten wird.

Das Extrudieren umfasst ein Extrudieren in eine Negativform, insbesondere ein Formrad mit umlaufenden Prägeblech, so dass das Profil als entsprechende Positivform ausgebildet wird, Vertiefungen werden auf der der profilierten Seite abgewandten Seite der Auflage, insbesondere durch ein umlaufendes Formrad, ausgeformt.

Der Riemen zum Transportieren umfasst eine Auflage und einen Treibriemen. Die erfindungsgemäße Auflage ist zum Verbinden mit dem Treibriemen zum Bilden des Transportriemens vorgesehen. Die Auflage ist zum vollflächigen Verbinden mit dem Treibriemen bestimmt.

Die Auflage kann in Form eines Bandes oder Riemens extrudiert werden. Die profilierte Seite kann insbesondere die Seite sein, die beim Transportieren eines Gefäßes dem Gefäß zugewandt und in Eingriff mit dem Gefäß bringbar ist. Aufgrund des Profils wird eine unebene Oberfläche erhalten, was ein sicheres Transportieren ermöglicht. Das Profil kann insbesondere in Form von Erhebungen und/oder Vertiefungen ausgebildet sein. Das Extrudieren erlaubt in einfacher Weise die Herstellung der Auflage als laufende Meterware. Daher ist das Verfahren nach Patentanspruch 1 effizienter und flexibler als die im Stand der Technik genannten Verfahren.

Die Gefäße können beispielsweise Flaschen sein. Eine Behandlungsmaschine kann eine Inspektionsmaschine für Flaschen sein. Der Kunststoff kann beispielsweise Polyurethan sein. Die Härte des Kunststoffs kann einen Wert im Bereich von 40 bis 70 Shore A aufweisen, insbesondere 50 bis 60 Shore A.

Der Kunststoff kann in einer gewünschten Breite extrudiert werden. Beispielsweise kann die Breite der extrudierten Auflage der Breite des Riemens entsprechen, für den die Auflage hergestellt wird. Die Breite der Auflage kann auch einem Vielfachen der Breite eines Riemens entsprechen. Dadurch ist die Breite der Auflage einfacher anpassbar an unterschiedliche Riemenbreiten.

Der Kunststoff kann beispielsweise mit einer Düse in die Negativform extrudiert oder gesprüht werden.

Bei der der profilierten Seite abgewandten Seite handelt es sich um die Seite, die vorgesehen ist, mit dem Treibriemen verbunden zu werden. Bei Verwendung einer solchen Auflage in Verbindung mit einem Treibriemen werden Hohlräume gebildet. Die Hohlräume können als Puffer dienen. Dies ermöglicht dem Profil der Auflage ein Einfedern, insbesondere beim Transport von Gefäßen mit unterschiedlichen Durchmessern. Dies hat den Vorteil, dass verschieden große Gefäße durch einen Riemen mit einer solchen Auflage transportiert werden können.

Gemäß einer weiteren bevorzugten Weiterbildung der Erfindung kann ein zweiter Kunststoff in die Vertiefungen extrudiert werden. Der zweite Kunststoff kann Polyurethan sein. Die Shore-Härte des zweiten Kunststoffs kann einen Wert zwischen 15 und 50 Shore A, insbesondere 25 und 50 Shore A, aufweisen.

Gemäß einer weiteren bevorzugten Weiterbildung der Erfindung kann der zweite Kunststoff die Vertiefungen ausfüllen. Weiterhin kann der zweite Kunststoff auf der der profilierten Seite abgewandten Seite eine plane, insbesondere durchgehende, Oberfläche bilden. Dies hat den Vorteil, dass die Auflage in einfacher Weise an einem Treibriemen befestigt, beispielsweise aufgeklebt oder geschweißt, werden kann.

Gemäß einer weiteren bevorzugten Weiterbildung der Erfindung kann der zweite Kunststoff eine niedrigere Shore-Härte aufweisen als der erste Kunststoff. Insbesondere kann der erste Kunststoff eine Shore-Härte von 60 Shore A haben; der zweite Kunststoff kann eine Shore-Härte von 25 oder 50 Shore A haben. Andere Shore-Härte Kombinationen sind denkbar, solange gewährleistet ist, dass die Shore-Härte des ersten Kunststoffs größer ist als die des zweiten Kunststoffs.

Der härtere Kunststoff befindet sich außen an der in Eingriff mit den Gefäßen bringbaren Seite der Auflage; der weichere Kunststoff befindet sich in den Vertiefungen und bildet eine Schicht an der Seite, die vorgesehen ist mit dem Treibriemen verbunden zu werden. Dadurch lässt sich eine definiertere Verformung des so erzeugten Profils erreichen, was insbesondere dann wichtig ist, wenn die Riemen mit der Auflage in Anlagen eingesetzt werden, wo eine genaue Positionierung der Gefäße zwischen den Riemen sichergestellt sein muss. Dies hat den Vorteil, dass das Ergreifen der Gefäße dann durch definiertere Verformung des Profils erfolgt, so dass die Gefäße gut positioniert werden können.

Gemäß einer weiteren bevorzugten Weiterbildung der Erfindung kann das Profil der Auflage eine Vielzahl von Elementen aufweisen, die sägezahn- und/oder lamellen- und/oder noppen- und/oder fischgräten- und/oder trapez- und/oder U-förmig ausgebildet sind. Die Elemente können ganz aus Kunststoff bestehen oder hohl sein. Die Elemente können auch aus zwei verschiedenen Kunststoffen bestehen. Des Weiteren können die Elemente abwechselnd mit dem zweiten Kunststoff ausgefüllt oder hohl sein. Entlang einer Reihe können die Elemente unmittelbar auf einander folgen oder aber einen bestimmten Abstand zu einander haben. Zwei Reihen nebeneinander können zu einander versetzte Elemente aufweisen. Weiterhin können die Elemente in Längsrichtung bezüglich der Laufrichtung des Riemens in Reihen nebeneinander so angeordnet sein, dass sie zueinander stets den gleichen Abstand aufweisen, d. h. symmetrisch angeordnet sein.

Dies hat den Vorteil, dass das Profil der Auflage an unterschiedliche Anforderungen, die sich beim Transportieren verschiedener Gefäße ergeben, angepasst werden kann.

Des Weiteren wird ein Verfahren vorgeschlagen zur Herstellung eines Riemens zum Transportieren von Gefäßen in einer Behandlungsmaschine mit dem Herstellen einer Auflage gemäß dem oben beschriebenen Verfahren, dem Zuführen eines Treibriemens an der der profilierten Seite abgewandten Seite der Auflage und dem Verbinden der Auflage mit dem Treibriemen.

Der Treibriemen kann ein Zahnriemen, ein Noppenriemen oder ein Flachriemen sein. Der Treibriemen kann eine in Längsrichtung verlaufende Stegleiste als Führungssteg aufweisen. Die Stegleiste kann elastisch sein. Der Treibriemen kann eine Verzahnung besitzen.

Gemäß Anspruch 7 betrifft die Erfindung außerdem einen Riemen mit einer geschlossenen Oberfläche zum Transportieren von Gefäßen in einer Behandlungsmaschine, der einen Treibriemen und eine mit den Gefäßen in Eingriff bringbare, profilierte Auflage umfasst, wobei die Auflage eine extrudierte Auflage ist.

Gemäß einer bevorzugten Weiterbildung des erfindungsgemäßen Riemens kann die Auflage eine erste Kunststoffschicht, welche mit den Gefäßen in Eingriff bringbar ist, und eine zweite Kunststoffschicht, welche zwischen dem Treibriemen und der ersten Kunststoffschicht angeordnet ist, umfassen, wobei die erste Kunststoffschicht eine größere Shore-Härte aufweist als die zweite Kunststoffschicht.

Die zweite Kunststoffschicht, die weicher ist als die erste, gibt beim Transport von Gefäßen mit einem größeren Umfang nach. Die Auflage verformt sich entsprechend dem Umfang des zu transportierenden Gefäßes in definierter Weise. Dies bietet den Vorteil, dass mit der Auflage verschieden große Gefäße in der Behandlungsmaschine gut positioniert werden können.

An Stelle der zweiten, weicheren Kunststoffschicht kann Luft im Profil der Auflage eingeschlossen sein.

Bevorzugte Ausführungsformen der Erfindung werden im Nachfolgenden unter Bezugnahme auf die Zeichnungen beschrieben.

### Kurzbeschreibung der Zeichnungen:

- Fig. 1: ist eine schematische Draufsicht einer Inspektionsmaschine mit einem Riemenpaar gemäß dem Stand der Technik.
- Fig. 2: ist eine schematische Schnittansicht eines Riemens mit einer Auflage.
- Fig. 3: zeigt ein Ausführungsbeispiel gemäß einer ersten Ausführungsform der Erfindung.
- Fig. 4: zeigt ein weiteres Ausführungsbeispiel der Erfindung.

### Beschreibung der Ausführungsformen:

In Fig. 2 ist der Aufbau eines Riemens 19 dargestellt, der aus einer Auflage 15 und einem Treibriemen 11 besteht. Der Treibriemen 11 besitzt eine Verzahnung. Des Weiteren weist der Treibriemen 11 eine Stegleiste 12 zur Höhenführung des Riemens 19 auf. Die Auflage 15 ist an der Seite des Treibriemens 11 angeordnet, die von der Verzahnung weg weist. Die Auflage 15 besitzt in gleichmäßigen Abständen längs zur Riemenerstreckung angeordnete sägezahnförmig ausgebildete Elemente 13. Die Sägezähne haben eine in Laufrichtung schräg nach vorne gerichtete Vorderflanke und eine entgegengesetzt zur Laufrichtung weisende, rechtwinklig zum Treibriemen ausgerichtet verlaufende Hinterflanke.

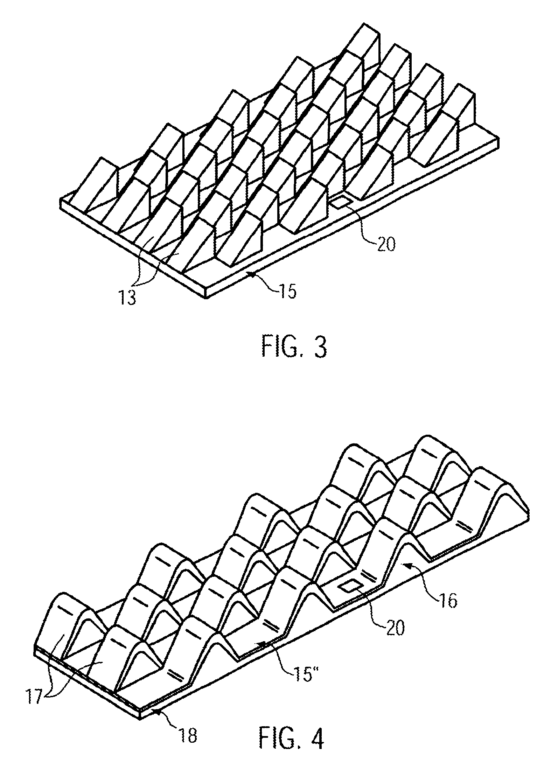

Fig. 3 zeigt eine erste Ausführungsform der Erfindung. In dieser Ausführungsform weist die Auflage 15 symmetrisch, d.h. in gleichmäßigen Abständen angeordnete sägezahnförmig ausgebildete Elemente 13 auf. Alternativ können die Elemente lamellen-, noppen-, fischgräten-, trapez- oder U-förmig gebildet sein. In Fig. 3 sind die sägezahnförmigen Elemente in Längsrichtung versetzt angeordnet. D.h. Entlang einer Reihe in Längsrichtung des Riemens sind die Elemente periodisch mit einem bestimmten Abstand angeordnet. Die Elemente in den Reihen in Querrichtung des Riemens sind gegeneinander versetzt. Alternativ können die Elemente auch in Längsrichtung des Riemens durchgehend angelegt sein. In Fig. 3 sind die Elemente einstückig ohne Hohlräume ausgebildet. Die dem Profil abgewandte Seite der Auflage bildet eine plane Oberfläche.

Gemäß einer zweiten, in Fig. 4 schematisch dargestellten Ausführungsform der Erfindung weist die Auflage 15' eine erste Kunststoffschicht 15" auf. Eine zweite Kunststoffschicht 18 füllt die Vertiefung 16 aus. In Fig. 4 ist erkennbar, dass das Profil mit einem Formrad erhalten wurde. Die Vertiefungen zur Aufnahme des zweiten Kunststoffs wurden mit einem Prägerad ausgeformt. Alternativ kann die Vertiefung einen gasdicht abgeschlossenen Hohlraum bilden. In Fig. 4 sind die Elemente 17 der Auflage lamellenförmig ausgebildet und in Längsrichtung des Riemens jeweils versetzt angeordnet.

In Fig. 3 und 4 ist eine Beschriftung 20 mit z.B. Firmennamen, Bezeichnung, Materialnummer, Seriennummer auf dem Formrad aufgebracht. Ebenfalls kann der Riemen durch Austausch der Prägeelemente mit Einsatzzweck und/oder Produktionszeit versehen werden.

## Patentansprüche

1. Verfahren zur Herstellung einer mit Gefäßen (5) in Eingriff bringbaren, profilierten Auflage (15) für einen Riemen (19) zum Transportieren der Gefäße in einer Behandlungsmaschine, wobei die Auflage durch Extrudieren eines ersten Kunststoffs erhalten wird, **dadurch gekennzeichnet, dass**
das Extrudieren ein Extrudieren in eine Negativform, insbesondere ein Prägeblech, umfasst, so dass das Profil als entsprechende Positivform ausgebildet wird, und wobei das Verfahren weiterhin umfasst:
Ausformen von Vertiefungen, insbesondere durch ein umlaufendes Formrad, auf der der profilierten Seite abgewandten Seite der Auflage.

2. Verfahren nach Patentanspruch 1, wobei ein zweiter Kunststoff in die Vertiefungen extrudiert wird.

3. Verfahren nach Patentanspruch 2, wobei der zweite Kunststoff die Vertiefungen ausfüllt.

4. Verfahren nach Patentanspruch 3, wobei der zweite Kunststoff eine niedrigere Shore-Härte aufweist als der erste Kunststoff.

5. Verfahren nach einem der Patentansprüche 1 - 4, wobei das Profil der Auflage eine Vielzahl von Elementen (13; 17) aufweist, die sägezahn- und/oder lamellen- und/oder noppen- und/oder fischgräten- und/oder trapez- und/oder U-förmig ausgebildet sind.

6. Verfahren zur Herstellung eines Riemens (19) zum Transportieren von Gefäßen (5) in einer Behandlungsmaschine, mit den Schritten:
Herstellen einer Auflage (15) gemäß dem Verfahren nach einem der Patentansprüche 1 -5;
Zuführen eines Treibriemens (11) an der der profilierten Seite abgewandten Seite der Auflage; und
Verbinden der Auflage mit dem Treibriemen.

7. Riemen (19) mit einer geschlossenen Oberfläche zum Transportieren von Gefäßen (5) in einer Behandlungsmaschine, der einen Treibriemen (11) und eine mit den Gefäßen in Eingriff bringbare, profilierte Auflage (15; 15') umfasst,
wobei
die Auflage eine extrudierte Auflage ist, wobei die Auflage eine profilierte Seite und eine der profilierten Seite abgewandten Seite aufweist, **dadurch gekennzeichnet, dass** die Auflage Vertiefungen auf der der profilierten Seite abgewandten Seite umfasst.

8. Riemen nach Patentanspruch 7, bei dem die Auflage eine erste Kunststoffschicht (15"), welche mit den Gefäßen in Eingriff bringbar ist, und eine zweite Kunststoffschicht (18), welche zwischen dem Treibriemen und der ersten Kunststoffschicht angeordnet ist, umfasst, wobei die erste Kunststoffschicht eine größere Shore-Härte aufweist als die zweite Kunststoffschicht.

## Claims

1. Method for producing a profiled cover (15), which can be brought into engagement with vessels (5), for a belt (19) for conveying the vessels in a processing machine, wherein the cover is obtained by extruding a first plastics material, **characterised in that**
the extrusion includes extrusion in a negative mould, in particular an embossing sheet, so that the profile is designed as a corresponding positive mould, and wherein the method also comprises:
forming recesses, in particular by a revolving shaping wheel, on the side of the cover facing away from the profiled side.

2. Method according to claim 1, wherein a second plastics material is extruded into the recesses.

3. Method according to claim 2, wherein the second plastics material fills the recesses.

4. Method according to claim 3, wherein the second plastics material has a lower Shore hardness than the first plastics material.

5. Method according to any one of claims 1 to 4, wherein the profile of the cover comprises a large number of elements (13; 17) which have a sawtooth and/or lamellar and/or knob and/or herringbone and/or trapezoidal and/or U-shaped design.

6. Method for producing a belt (19) for conveying vessels (5) in a processing machine, comprising the following steps:
producing a cover (15) according to the method according to any one of claims 1 to 5;
supplying a drive belt (11) at the side of the cover facing away from the profiled side, and
connecting the cover to the drive belt.

7. Belt (19) with a closed surface for conveying vessels (5) in a processing machine, which comprises a drive belt (11) and a profiled cover (15; 15') which can be brought into engagement with the vessels, wherein the cover is an extruded cover, wherein the cover has a profiled side and a side facing away from the profiled side, **characterised in that** the cover comprises recesses on the side facing way from the profiled side.

8. Belt according to claim 7, wherein the cover comprises a first plastics material layer (15"), which can be brought into engagement with the vessels, and a second plastics material layer (18), which is arranged between the drive belt and the first plastics material layer, wherein the first plastics material layer has a higher Shore hardness than the second plastics material layer.

## Revendications

1. Procédé pour fabriquer un support profilé (15), apte à être engrené avec des récipients (5), pour une courroie (19) pour le transport des récipients dans une machine de traitement, le support étant obtenu par extrusion d'une première matière plastique, **caractérisé en ce que**
l'extrusion comprend une extrusion dans un moule négatif, en particulier une tôle de matriçage, de sorte que le profil est conçu comme une forme positive correspondante, et le procédé comprenant également :
la formation de creux, en particulier grâce à une roue de formage tournante, sur le côté du support opposé au côté profilé.

2. Procédé selon la revendication 1, étant précisé qu'une seconde matière plastique est extrudée dans les creux.

3. Procédé selon la revendication 2, étant précisé que la seconde matière plastique remplit les creux.

4. Procédé selon la revendication 3, étant précisé que la seconde matière plastique présente une plus faible dureté Shore que la première.

5. Procédé selon l'une des revendications 1 à 4, étant précisé que le profil du support présente une multiplicité d'éléments (13 ; 17) qui ont une forme en dents de scie et/ou en lamelles et/ou en bosses et/ou en chevrons et/ou trapézoïdale et/ou en U.

6. Procédé pour fabriquer une courroie (19) pour le transport de récipients (5) dans une machine de traitement, avec les étapes qui consistent :
à fabriquer un support (15) avec le procédé selon l'une des revendications 1 à 5 ;
à amener une courroie d'entraînement (11) sur le côté du support opposé au côté profilé ; et
à relier le support à la courroie d'entraînement.

7. Courroie (19) avec une surface fermée pour le transport de récipients (5) dans une machine de traitement, qui comprend une courroie d'entraînement (11) et un support profilé (15 ; 15') apte à être engrené avec les récipients,
étant précisé que le support est un support extrudé et qu'il présente un côté profilé et un côté opposé au côté profilé,
**caractérisée en ce que** le support comprend des creux sur le côté opposé au côté profilé.

8. Courroie selon la revendication 7, pour laquelle le support comprend une première couche de matière plastique (15") qui est apte à être engrené avec les récipients, et une seconde couche de matière plastique (18) qui est disposée entre la courroie d'entraînement et la première couche de matière plastique, étant précisé que la première couche de matière plastique présente une plus grande dureté Shore que la seconde.
